# EUROPEAN PATENT SPECIFICATION

(11) **EP 1 596 660 B1**
(45) Date of publication and mention of the grant of the patent: **27.10.2010**
(21) Application number: 04704034.0
(22) Date of filing: 21.01.2004
(51) Int. Cl.: A21D 13/00, A21D 8/02

(54) **PIZZA AND CRUST HAVING AN IRREGULAR EDGE**
PIZZA UND KRUSTE MIT UNREGELMÄSSIGEM RAND
PIZZA ET CROUTE PRESENTANT DES BORDS IRREGULIERS

(30) Priority: 29.01.2003 US 354896; 09.12.2003 US 732173; 15.01.2004 US 758296
(43) Date of publication of application: 23.11.2005
(73) Proprietor: Dr. Oetker (UK) Ltd., Leeds LS158ZB (GB)
(72) Inventor: WALTER, Shelly, Cincinnati, OH 45205 (US); PAFKO, Wayne, M., Marshall, MN 56258 (US); MORAD, Mohamed, M., Ypsilanti, Michigan 48197 (US)
(74) Representative: Graf von Stosch, Felix
(86) International application number: PCT/US2004/001467
(87) International publication number: WO 2004/066736

(56) References cited:
- EP-A- 0 691 078
- WO-A-03/022059
- WO-A-03/022060
- DE-A- 10 012 697
- GB-A- 2 284 738
- US-A- 4 978 544
- US-A- 5 117 749
- US-A- 5 865 107
- US-A- 5 989 603
- US-A- 6 156 356
- US-A1- 2002 076 474
- US-A1- 2002 090 422
- US-A1- 2002 197 360
- US-A1- 2003 003 211

## Description

### Field of the Invention

The invention relates to a premium, high quality, frozen parbaked pizza product having sauce, cheese and toppings combined with a premium crust. The crust is a demonstrably high quality baked product having a crispy exterior and a soft, chewy, bread-like interior. The baked product using the parbaked crust, like a fresh oven baked product, also has toast marks, volume increase and other indicia characteristic of restaurant wood fired brick-oven baking processes. The invention also relates to a crust with enhanced properties due to formulation control and baking/cooking conditions. The invention also relates to an unique method for manufacturing a high quality parbaked frozen pizza crust product that can be combined with toppings and frozen. The frozen parbaked product can be baked conventionally to prepare a premium quality pizza that mimics the nature of a hand made, brick-oven baked product.

### Background of the Invention

The foods industry has developed and sold a spectrum of products ranging from the basic utility product to premium products through the use of commodity ingredients and processes through the best processing and the best and highest quality materials. In each incremental step in higher quality from commodity to premium products, an improvement in recipe, ingredients or processing is found, Each level of quality is recognized for its inherent value and utility. No one level is regarded as undesirable, but fits a need in the foods marketplace. Pizza manufacture is one example of such a range of products.

Frozen uncooked and parbaked pizza products for home use have been available in the retail marketplace for many years. Generally, these products are round, typically 20.32 - 50.80cm (8-20 inch) radius, circular shapes and thick or thin crust that typically are made using cheese, meat and other toppings. The major proportions of such pizzas are common consumer quality pizzas, typically used to feed large numbers of students, children or other groups in substantial quantity in rapid consumption. These products are adequate for their intended use. These pizzas are typically not considered premium quality due to the simple character of the crust and the commonality of the meat, cheese, sauce and vegetable toppings. In the retail frozen pizza industry, a truly upscale premium or super premium product has been strongly desired for many years. Often, frozen pizzas have not competed well against hand made pizza made fresh in pizzerias or made with fresh ingredients in restaurants or pizzerias using improved cooking techniques such as wood fired baking ovens. Such pizza are made with premium crust, meats, fish, cheese, sauce and toppings and such ovens produce a higher quality baked crusts due to the crispy exterior and chewy soft interiors from fresh dough. Further, hand made pizzas tend to be more carefully prepared and served and have an attractive visual appeal.

Important entries into this category are the Freschetta® pizza line manufactured by Schwan's Sales Enterprises, Inc, and DiGiomo's® pizza products. Both are advertised as rivaling pizzeria pizzas. These enhanced products have improved product characteristics when compared to the commonly available utility style round pizza. Again, these products are adequate in their market segment. They are recognized, however, by the most discerning consumers, not to be equal to highest quality restaurant hand made prepared pizzas from high quality ingredients and hand formed crusts baked with premium cooking equipment. No truly frozen premium pizza product is available.

Accordingly, we have found a substantial need in this industry for an improved premium pizza similar in most characteristics to restaurant baked products made from high quality meats, fish, cheeses, sauces and toppings that are placed on a premium crust similar to a crust baked in a wood brick-oven.

Examples of prior art pizza manufacturing approaches include US5989603, EP0691078, US5117749 and US5865107. All of which produce very regular pizzas which appear mass produced.

### Brief Discussion of the Invention

According to a first aspect there is provided a parbaked crust for a premium pizza, the crust comprising a flour based dough formula comprising 65 to 75% wt moisture, 0.5 to 2wt% sugar sweetener, and less than 2% oil, theparbaked crust capable of expansion upon baking at 176.6° to 232.2°C; the crust further comprising a planar crust in a square aspect and having a crust edge, the crust having a fourfold symmetry when rotated in the plane of the planar crust, the crust edge having an irregular profile, wherein the irregular profile provides registration indicia.

According to a second aspect there is provided a method of making a parbaked crust for a premium pizza, the method comprising:
(a) preparing a crust comprising a flour based dough formula comprising 65 to 75% wt moisture, 0.5 to 2wt% sugar sweetener, and less than 2% oil;
(b) forming the dough into a crust further comprising a planar crust in a square aspect and having a crust edge, the crust having a fourfold symmetry when rotated in the plane of the planar crust, the crust edge, having an irregular profile,
   wherein the irregular profile provides registration indicia;
(c) parbaking the crust at a temperature of at least 426.7°C for a period of less than 120 seconds to form a parbaked crust; the parbaked crust capable of expansion upon baking at 176.6°C to 232.2°C.

The invention relates to a premium upscale frozen pizza and methods for making that pizza. We have found that combining the highest quality meats, fish, sauces, cheeses and other toppings with the highest quality packaged frozen crust produces a pizza product that rivals a fresh pizza. The pizza includes a frozen parbaked premium crust portion made from a premium dough formula. The crust typically comprises a premium or super premium, generally flat, roughly square product having a surface that can be filled with sauce, cheese and other toppings. We have found a unique recipe and process for the dough and crust that produces an enhanced premium crust. Careful control over sugar, moisture, oil and processing conditions results in a premium crust. The unique crust can be parbaked to a quality material. After adding pizza toppings, the premium pizza can be frozen and baked at home. Surprisingly, the crust expands when cooked at home obtaining a crisp exterior and soft bready interior. The periphery of the crust, while having an overall square configuration, has a deliberately formed, irregular perimeter mimicking a hand formed crust.

The premium dough formula includes high moisture content and specific controlled sugar (mono- and di-saccharide) content. The high moisture and sugar content provide the parbaked dough with the characteristic of adaptation to a high temperature, short time frame baking cycle in which the dough is converted into a parbaked premium pizza crust. The parbaked pizza crust has the unusual property that it rises both upon parbaking and upon final baking. The risen, expanded and baked crust obtains toast marks substantially similar to a brick-oven fired conventional hand made dough structure. Typical pre-baked dough does not expand upon final baking under common production conditions. Thus the sugar content and high moisture content provide substantial processing and product value. The processing value relates to the production of "no time" dough, requiring minimal floor time and no proof time to achieve the desired result. The floor time is just enough time for dough to transfer to the next stage in processing, generally less than 15 minutes, commonly less than 10 minutes, and often less than 5 minutes.

In the process of the invention, the dough is mixed with the unique recipe or formula. After careful processing, the dough is cut to the desired shape and the dough is then parbaked at high temperature for a short period of time to form the parbaked crust having the characteristic toast marks and the characteristic irregular edge, square aspect derived from sheeting and cutting. The parbaking step ensures that the customer can bake the product at home forming a high quality premium pizza. The frozen parbaked topped pizza of the premium product of the invention, when baked at home, rises during baking, resulting in a less dense, more open cell structure. The postbaked crusts, when completely baked at home, show horizontal lines within the plane of the crust indicating that larger bubbles or air cells have formed and then partially collapsed during final baking of the parbaked product. The fully baked crust typically increases in thickness, irregularity (departure from the plane of the crust) than that measured before baking. Not all height increase is due to aerosols, but the height results from irregular changes to the substantially plane or parbaked crust that increases stack height. The product of the invention can be frozen and packaged conventionally and shipped to retail outlets. A consumer purchases the frozen premium pizza at the retail outlet and takes it home and maintains it in a frozen state until time for use. When used, the pizza product is then baked at conventional oven temperatures, commonly 191°C to 232°C (375°F to 450°F) for 8-20 minutes to fully cook the toppings and to complete crust baking, crust expansion and color formation in the crust. The meats, fish, cheese, sauce and toppings are completely baked when the product is baked at home. The toppings, cheese and sauce may be relatively uncooked when placed on the parbaked dough.

An important aspect of the invention is the method of making the pizza crust to form a premium high quality pizza product. In that process, dough is prepared having a carefully controlled moisture content and a carefully controlled sheer content along with a low oil content and other conventional ingredients. The dough is then processed carefully to a point that it can be sheeted into a dough sheet. Such processing steps can include sheeting, combining the sheeted dough with bread crumbs, carefully modifying thickness of the sheeted layer, careful control of rest or floor time and a careful cutting of the dough shape from the sheeted dough.

Typically, the process of the invention includes no separate proofing time yet results in a high quality dough material.

In a four-way or C⁴ symmetrical crust format, the crust can be turned by 90° increments and the irregular surface profile of each side will be substantially identical. One test of such identity is the overlap of a side with the adjacent side. This four way symmetry provides both the appearance ofbeing hand formed, and manufacturing simplicity and convenience to ensure that the pizza is fully provided with sauce covering the desired surface portion. The sauce is combined with cheese topping along with meat and vegetable add-ons as desired. The product is manufactured without a designed edge, however, in the baking process, the edge can have raised portions randomly depending on the non-uniformity in crust formulation and baking extent.

The irregular aspect four fold symmetry, which is identical from crust to crust, provides an unique ability to place accurately the crust and register the crust in a specific location such that the sauce, cheese and other toppings can be carefully applied in exactly the right location. For the purpose of this disclosure, the term "registration" indicates that the crust is aligned carefully with the application apparatus such that the sauce, cheese and other toppings are placed exactly in the correct location on the crust in a repeatably precise location from crust to crust during production. Such accurate registration is obtained by placing the crust having registration indicia in the crust edge on a conveyor surface in contact with a registration means on the conveyor that holds the crust in place using the irregular edges.

### Brief Discussion of the Drawings

FIGURE 1A and 1B are planar views of the top of an un-topped pizza product of the invention showing its overall square aspect with non-uniform sides. The edges can have a random curvilinear aspect or a random linear line segment aspect.
FIGURE 2 is an end view of a cross-section of both a par baked and fully baked pizza crust product of the invention having a roughly square aspect and the four-way symmetry of the irregular sides.
FIGURE 3 is a cross-section of the pizza shown in Figure 2 showing the edge, surface and the interior characteristic of the pizza crust.
FIGURE 4 is a view of the top surface of a pizza crust of the invention showing the overall square aspect, irregular edges, and the toast mark characteristic of the parbaked pizza crust.
FIGURE 5 is a bottom view of the pizza crust shown in Figure 4 showing the color of the toast marks in the pizza crust of the invention.
FIGURE 6 is a side and cross-sectional view of the crust of the invention showing its tendency to form bubbles, expanded zones in the crust, toast marks and a bready interior texture.
FIGURE 7 is a close up of the bottom of the pizza crust of the invention showing the addition of breadcrumbs to the bottom of the crust to increase flavor crust character.

### Detailed Discussion of the Invention

The invention relates to a premium upscale frozen pizza, an improved crust made from a carefully controlled recipe or formula and to methods for making the premium pizza. The crust uses a parbaked crust, an improved formula and an improved process for forming the parbaked crust and an unique and improved crust profile and square or rectangular aspect.

The square pizza can range from about 38.1 x 38.1cm (15 x 15 inches) to as small as 7.62 x 7.62cm (3 x 3 inches); useful sizes include 30.48 x 30.48 or 20.32 x 20.32cm (12 x 12 or 8 x 8) size preparations. A 30.48cm (12 inch) side can vary in dimension from 29.21 to 31.75cm (11.5 to 12.5 inches) on each side and still be considered a square crust. The crust can cover a surface area of about 710 to 968cm² (110 to 150in²) and can weigh about 210 to 340g (9 to 12oz)

The pizza of the invention comprises a typically parbaked or baked crust having an irregular edge. The crust preferably has no raised edge, is substantially flat from edge to edge and ranges in thickness from about 0.2 to 2cm, often 0.4 to 1,2cm. The parbaked crust is typically more flat than the fully baked crust that can develop substantial bubbling or blistering in the crust product.

The square pizza, has a four-way symmetry such that the edge profile of any selected edge is identical to the edge profile of any adjacent edge. The pizza can be rotated through a 90° rotation and at each 90° position, the edge profile is substantially identical or overlapping. Such an edge aspect is both pleasing to consumers and provides ease and convenient manufacture. The pizza can be precut or uncut during manufacture.

The 30.48 x 30.48cm (12 x 12 inch) premium pizza or any other of the square pizzas can be cut into any arbitrary number of individual pieces. The pieces can range from relatively regular sizes of about 5.08 x 5.08cm (2 x 2 inches) to rough cut irregular pieces or larger rectangular pieces that can range from about 5.08 x 10.16cm (2 x 4 inches), as high as 7.62 x 15.24cm (3 x 6 inches). The pizzas of the invention can be made in single serving portions in square 7.62 x 7.62cm or 10.16 x 10.16cm (3 x 3 inch or 4 x 4 inch) size portions. Larger 20.32 x 20.32cm (8 x 8 inch) portions can be cut into four equal portions or three rectangular but equal portions depending on the desires of the preparer or the ultimate consumer. The final size, or even shape, of the individual pieces depends on the serving decision of the pizza preparer or the desires of the ultimate consumers.

The premium composition of the invention can have premium quality cheese, sauce and toppings applied to the improved crust material. A variety of typically tomato based sauces, a variety of cheeses and cheese blends can be used in combination with toppings selected from meat sources, fish sources, vegetable sources or fruit sources or other typical topping materials. Pizza sauces can include a variety of ingredients including tomato portions, tomato sauce, tomato paste, seasonings including salt and spices. Cheeses can include mozzarella, Romano, Parmesan, jack and others. Commonly, cheeses in the form of shaved, crumbled or string form derived from mozzarella, Romano, Parmesan, provolone and whole milk or non-pasteurized cheeses can be used in the compositions of the invention. Cheeses and cheese blends can be used both in the form of blended materials wherein two or more cheeses are blended and then applied to the crust. However, cheeses can also be added to the crust in layers without premixing.

Premium quality meats can also be applied to the pizzas of the invention. Italian sausages, pepperoni, prosciutto, seafoods such as shrimp, mussels, etc. can be used. Vegetarian pizzas can also be made including vegetables including spinach, mushrooms, onions, green peppers, etc. Fruit materials can also be used on the pizzas, both in a vegetarian and non-vegetarian form. Pineapples, apples, etc. can also be used on the pizzas of the invention. Preferred embodiments of the pizzas of the invention include Italian style pepperoni pizzas with a blended cheese topping, and Italian cheese pizzas having no other meat toppings but optionally including vegetable add-ons. Classic supreme pizza including pepperoni, Italian sausage, green pepper, onion, and mushroom can be used. Southwest chicken formulas including grilled chicken, Mexican salsa, corn, beans, and other Tejano or Mexicano seasonings. A spinach and roasted mushroom pizza can be made using rough-cut spinach and chopped and roasted mushrooms. Lastly, a bacon and blended cheese of Italian origin including mozzarella, Parmesan, and Romano can be made.

One important characteristic of the premium add-on ingredients of the invention include its rough cut appearance. The term "rough cut appearance" generally refers to the fact that the individual portions of an ingredient have a relatively large size in the chopped parts. Examples of large chopped premium ingredients include quartered and sliced pepperoni, shaved cheeses, rough cut green pepper, rough cut onion, rough cut and roasted mushrooms, sausage chunks, rough cut grilled chicken, large shrimp pieces, quartered scallops, rough cut ham portions, rough cut pineapple or apple parts, and other ingredients. Typically, these rough cut pieces generally have a major dimension greater than about 0.64cm (1/4 inch) and, in some cases, can be, along a major dimension, greater than about 1.27cm (½ inch). The dough material of the premium pizza of the invention typically is formed with relatively low fat content.

One aspect of the invention comprises the crust used to make the pizza. The crust comprises a parbaked product. The term "par baked" indicates that the pizza crust is at least partially baked after its shape has been established and prior to adding the toppings. The parbaked product is then taken to a consumption location at which time it is baked until fully cooked throughout and made suitable for serving.

The crust of the invention typically is made from a pizza dough formula that has substantially increased moisture and appropriate controlled sugar and oil content. The moisture, low oil and sugar content provide improved texture and appearance after parbaking. The parbaked product, when finally baked, expands during baking and obtains enhanced toast marks. These characteristics of the dough and its processing, described below, are parameters which permit the premium pizza of the invention to be initially parbaked to provide the parbaked qualities discussed in this application and to result in the final premium baked product. The pizza crust of the invention obtains a crisp exterior and a light breading interior from the formula and the processing of the dough materials.

The following example does not fall within the scope of the invention, but is useful for its understanding.

The premium dough from which the premium dough crust is prepared generally comprises from about 49 to about 52 wt% flour, less than about 2 wt% (flour based recipe = 3 to 4%) oil or other fat source, about 34 to about 37 wt% (flour based recipe = 66.0 to 72.0%) water and about 1 to 2 wt% (flour based recipe = 2.0 to 3.0%) sugar sweetener, commonly a mono- or disaccharide sugar source.

The following example does not fall within the scope of the invention, but is useful for its understanding. Useful ranges for the recipe include the following:

| **Ingredients** | **Name** | Attribute |
|---|---|---|
| 50-60 | Flour | |
| 34-37 | Water added | By Weight |
| 3-4 | Dough Premix | By Weight |
| 3-4 | Cream Yeast (70% water - 30% active) | By Weight |
| 2-5 | Ice | By Weight |
| 1.3-1.9 | Soy Oil | By Weight |
| 1.0-2 | Non Fat Dry Milk Powder | By Weight |
| 0.2-1 | Oat Fiber | By Weight |
| 0.4-2 | Sugar | By Weight |
| 0.1-2 | Vital Wheat Gluten | By Weight |
| 35-45 | TOTAL MOISTURE | |

In addition, the dough can contain minor amounts of a variety of other baking additives including salt, spices, etc. The pizza can be made from a crust comprising one or more of the following: enriched wheat flour (wheat flour, niacin, reduced iron, thiamin mononitrate, riboflavin, folic acid, malted barley flour, ascorbic acid), water, yeast, contains 2% or less: soybean oil, dough conditioner (vegetable gum, sodium steroyl lactylate, soy flour, mono- and di-glycerides, dextrose, enzymes, 1-cysteine), salt, nonfat dry milk powder, baking powder (sodium acid pyrophosphate, sodium bicarbonate, monocalcium phosphate), sugar, calcium propionate added as a preservative.

The nature of fats used in the preparation of the pizza crust of the invention is typically room temperature oils. Room temperature solid fats are non preferred but can be used if needed, either alone or in combination with oil materials. The oil is typically present in the formula in an amount from about 1 to less than 2 wt%, The dough contains an increased amount of moisture relative to conventional dough and an specific controlled amount of sugar materials. Moisture is typically added to the ingredients by premixing the moisture with the ingredients and mixing the hydrated material into the dough or water can be added directly to the mixer with the dry ingredients.

The premium pizza dough of the invention contains a specific controlled proportion of sugar as discussed above. Such sugars can comprise sucrose, fructose, glucose, high fructose corn syrup, or other sweet mono- or disaccharides commonly used in baking materials. The amount of moisture used in the pizza dough materials is more than the amount required to form the dough into a workable dough mass. The amount of moisture used in making the dough results in a first blended dough having a substantial wet and sticky consistency indicative of excess water. The water content of the dough is typically maintained in the dough during initial mixing and processing. Close control of processing temperature can improve processability. The dough can be floured or crumbed with breadcrumbs to improve processability and dough quality after baking. A preferred formula for the crust is as follows;

### Preferred Formula

### Ingredient List

The following example does not fall within the scope of the invention, but is useful for its understanding.

| **Ingredients %** | **Name** | **Attribute** |
|---|---|---|
| 51.04 | Flour | |
| 32.67 | Water | By Weight |
| 4.25 | Dough Premix | By Weight |
| 4.21 | Cream Yeast (70% water) | By Weight |
| 3.40 | Ice | By Weight |
| 1.70 | Soy Oil | By Weight |
| 1.36 | Non Fat Dry Milk Powder | By Weight |
| 0.51 | Oat Fiber | By Weight |
| 0.51 | Sugar | By Weight |
| 0.34 | Vital Wheat Gluten | By Weight |
| 99.99 | | By Weight |
| | TOTAL MOISTURE = 35.6% | |

### MIXING

One important process for mixing the dough of the invention includes mixing a dough having relatively high moisture content, specific controlled sugar content, relatively low fat or oil content which is initially manufactured at a low dough temperature. In the process of the invention, the ingredients (see the formula above) are fed to a horizontal, high-speed mixer and maintained at relatively low temperature that can range from about 21° to 32°C (70° to 90°F) The mixer is operated at high speed until a uniform mass is produced in the mixer. The mixer's content is then discharged from the mixer onto a conveyor belt moving at a relatively slow rate, commonly about 0.305 to about 0.610 m/min (about 1 to about 2 ft/min) The dough is maintained on the belt at a slow rate of speed for a short period of time, less than 15 minutes, with optimized temperature and formulae less than 10 minutes, often less than 5 minutes, to permit the dough to rest after mixing. The dough is maintained on the conveyor belt at a temperature of about 21° to 35° (70 to 95°F) often temperatures of about 21° to 32°C (70 to 90°F) are used. While on the belt, the dough takes the appearance of a wet, sticky mass of dough. After the dough has rested for a sufficient period of time to obtain an initiation of the fermentation process and to allow the dough to be sheeted successfully, the dough is then sheeted. The dough is machined (i.e.) rolled or extruded through a sheeting extruder to form a dough sheet. The dough sheet is then extruded onto an edible crumb layer in an amount of about 0.907 to 18.144g of crumb/kg of sheeted dough (2 to 40 grams of crumb per lb of sheeted dough) or about 4.536 to 9.072 grams of crumb per kg of sheeted dough (10 to 20 grams of crumb per lb. of sheeted dough). The crumbs provide crispness for the final baked product. The opposite side from the crumb side is floured, placed on an overhead belt and then permitted to rest for an additional period of greater than 10 minutes at 21° to 37.8°C (70 to 100°F). The surfaces of the dough sheet are then heavily floured and then again discharged onto a layer of bread crumbs at a rate of 4.536 to 9.072 grams of bread cnunb per kg of sheeted dough (about 10 to about 20 grams of bread crumbs per lb. of sheeted dough) to ensure that both sides of the dough sheet are fully incorporated with bread crumbs. The fully processed dough is then directed to a sheeting roller to adjust the thickness of the dough. The dough sheet is then directed to a die cutting station or roller cutting station or any means of cutting the dough in which the overall square aspect of the crust is cut into the sheeted dough in the four-fold symmetry shape or the rectangular shape is cut into the sheeted dough. Both the square and rectangular pizzas are cut with irregular edges. The irregular shape of the square pizza always includes registration indicia, commonly, an indentation in the irregular periphery of the dough that can cooperate with registration means to maintain the position of the dough when topped using automated topping equipment. The topping means includes a conveyor having a registration peg against which the registration indicium from the dough rests to accurately place the crust in the topping apparatus. Once cut into the appropriate square or rectangular size, the crust travels to the oven and can have an oil spray to improve the surface of the crust with respect to sauce, cheese and toppings and to maintain moisture within the crust and enhance eating qualities.

The prepared crusts are then baked at high temperature for a short period of time to obtain the parbaked structure. The basking temperature is typically in excess of 427°C (800°F), commonly, from about 482° to 593°C (900° to 1100°F) for 60 to 90 seconds. The high heat results in an improved texture, attractive browned appearance and creation of toast-like marks substantially similar to those found in brick-oven baking product. Commonly, the dough increases in volume during the parbaking process, at least 10%, typically greater than 25% often as much as a 50% increase.

The parbaked crusts can be immediately topped with cheese, sauce and other toppings. Alternatively, the crusts can be packaged in multiple crust packaging and shipped to a location for topping, packaging and shipment to retail outlets.

At the retail outlet, the pizzas are maintained in frozen condition in freezer chests for purchase. Consumers can then purchase the frozen pizzas and can maintain them at home in a frozen state until cooked. Commonly, the pizzas are then removed from conventional packaging materials and placed in consumer ovens and cooked at a temperature of 190° to 232°C (375°F to 450°) for 8-20 minutes to complete cooking of the dough and to fully cook the cheese, sauce and other toppings.

In the manufacture of the pizza crust of the invention, the ingredients in the above formula are combined in the food grade high-speed mixer. Preferably, horizontal high speed mixers are used to combine and render the formula uniform in character. Once mixed into a wet dough, the contents of the mixture is discharged onto a belt moving at a slow rate that permits the dough to rest for 15 minutes at elevated temperatures of about 26.7° to 35°C (80 to 95°F). The resting dough takes the appearance of a wet sticky mass. The wet sticky mass is then extruded into a sheet form onto a bread crumb layer providing a substantially uniform bread crumb layer providing crispness for the dough structure. The top of the dough is then floured and permitted to rest again for a substantial period at elevated temperature of about 21°C to 32°C (70 to 90°F). The dough is then again discharged onto a breadcrumb bed incorporating breadcrumbs into the bottom surface of the dough. The breadcrumbs are added to one surface or to both surface of the dough at an amount of about 4.536 to 9.072g/kg (10 to about 20gms/lb). Once the breadcrumbs are incorporated into the dough surfaces, the dough is reduced in thickness to an overall thickness of about 0.2 to about 0.4cm. Bread crumbs aid in providing a crispy exterior.

Once the thickness is adjusted, the dough is sent to a die cutter or roller cutter or any means to cut the dough. The roughly square portions with the four way symmetrical edges are cut from the sheeted material to form the roughly square unbaked crust. A rimless 29.2 to 30.5cm (11.5 to 12 inch) square pizza crust with C_symmetrical irregular/wavy sides cut from sheeted wheat flour dough after baking. The rectangular portions are cut from the sheeted material to form the rectangular unbaked crust. It has a medium bake color background with toast marks on top. There are golden brown grill marks and visible breaderumbs on the bottom.

### Untopped Crust Examples

### Example I

The following example does not fall within the scope of the invention, but is useful for its understanding.

A crust was prepared using the preferred formula and was parbaked at 593°C (1100°F) for 60 seconds. The parbaked crust was baked at 218°C (425 °C) for 15 minutes. The product inspection was as follows:

### Physical & Chemical Characteristics

| **Property (Attribute)** | **Standard Description or Target/Min/Max** | **UOM** |
|---|---|---|
| Weight (Dough) | Dough + breaderumbs 335 (1.8) 320 (11.3) 349 (12.3) | g (Ounces)) |
| Weight () | Breadcrumb weight per kg of dough 6.04 4.50 9.13 (Breadcrumb weight per lb. of dough) (0.47) (0.35) (0.71) | g (Ounce(s)) |
| Dimensions (Crust) | Packing size 29.5 (11.6) 28.2 (11.1) 30.7 (12.1) | cm (Inch(es)) |
| Dimensions (Crust) | After freeze 29.2 (11.5) 27.9 (11) 30.5 (12) | cm (Inch(es)) |

### Physical & Chemical Characteristics

| **Property (Attribute)** | **Standard Description or Target/Min/Max** | |
|---|---|---|
| Moisture () | Per 100 grams 40.05 | % |
| Protein | Per 100 grams 8.01 | g/100 |
| Total Fat | Per 100 grams 2.74 | gm |
| Sugar (sweetener) | Per 100 grams 0.51 0.4 0.8 | gm |
| Ash | 1.10 | % |

### Sensory Crust Characteristics

| **Certification** | **Comment** |
|---|---|
| Appearance | Bubbling in the finished baked crust (see Figure 6). |
| Appearance | Breadcrumbs on the bottom of crust (see Figure 7) |
| Color | Golden brown bake with toast marks on the bottom, see Figure 4 -5) |
| Color | Medium golden baked color background with toast marks on top (see Figure 4 - 5) |

After baking, the crust resulting from the parbaked crust, had a high quality, light, bready character with a crispy exterior crust and a bready interior similar to that of freshly baked bread and freshly baked pizza from a restaurant or pizzeria. The crust had characteristic toast marks of brick-oven baking and had a rough hand made appearance.

### Example II

The following example does not fall within the scope of the invention, but is useful for its understanding.

A second crust was prepared with a formula substantially the same as in Example 1.

### Physical & Chemical Characteristics

| **Property (Attribute)** | **Standard Description or Target/Min/Max** | **UOM** |
|---|---|---|
| Weight (Dough) | Dough + Breadcrumbs 335 (11.8) 320 (11.3) 349 (12.3) | g (Ounce(s)) |
| Weight () | Breadcrumb weight per Kg of dough 6.04 4.50 9.13 (Breadcrumb weight per lb. of dough) (0.47 0.35 0.71) | g (Ounce(s)) |
| Dimensions (Crust) | Packing size 29.5 (11.6) 28.2 (11.1) 30.7 (12.1) | cm (Inch(es)) |
| Dimensions (Crust) - | After freeze 29.2 (11.5) 28.2 (11) 30.5 (12) | cm (Inch(es)) |
| Thickness | -- 0.25 -- | cm (Inch(es)) |

### Physical & Chemical Characteristics

| **Property (Attribute)** | **Standard Description or Target/Min/Max** | |
|---|---|---|
| Moisture () | Per 100 grams 40.05 | % |
| Protein () | Per 100 grams 8.01 ..... | g/100 |
| Total Fat () | Per 100 grams 2.74 -- -- | gm |
| Sugar (Sweetener) | Per 100 grams 0.51 0.4 0.8 | gm |
| Ash | | % |

### Sensory Crust Characteristics

| **Certification** | **Comment** |
|---|---|
| Appearance | Bubbling in the finished baked crust (see Figure 6) |
| Appearance | Breadcrumbs on the bottom of crust |
| Color | Golden brown bake with toast marks on the bottom (see Figures 4-5) |
| Color | Medium golden baked color background with toast marks on top |
| Appearance | No tears, holes, broken edges |
| Appearance | Crust must have sealed, irregular edges provided by die cutter |
| Appearance | No excessive dusting flour on finished crust |
| Appearance | Frozen crust should be flat with no blisters or broken blisters |
| Appearance | Upward or downward turned edges |
| Appearance | Breadcrumb coverage must CONSISTENTLY cover bottom of crust |

After baking, the crust resulting from the parbaked crust, had a high quality, light, bready character with a crispy exterior curst and a bready interior similar to that of freshly baked bread and freshly baked pizza from a restaurant or pizzeria. The curst had characteristic toast marks of brick-oven baking and had a rough hand made appearance.

### Example III

Parbaked pizzas having a crust as described above and toppings comprising the following examples were prepared.

### Example IIIa

### SPINACH MUSHROOM

Order of topping: Crust, olive oil, cream onion sauce, cheese, spinach/garlic/mushroom blend. Cheese shred is thin, short cheese shred. Mushrooms are marinated, then grilled prior to freezing.

| **Spinach Mushroom** | **Ounce** | **g** |
|---|---|---|
| Crust 11 1/4 inches square | 8.9-10.2 | 252-289 |
| Olive Oil | 0.35 | 10.0 |
| Cream Onion Sauce | 2.70 | 76.5 |
| Fontina Shredded | 1.00 | 28.4 |
| While Milk Mozzarella Shred Regular | 2.00 | 56.7 |
| Spinach | 1.00 | 28.4 |
| Roasted Garlic | 0.40 | 11.3 |
| Roasted Mushrooms | 0.75 | 21.3 |
| Roasted Mushroom Portabella | 0.50 | 14.2 |

### Example IIIb

### SOUTHWEST CHICKEN

Order of topping: Crust, olive oil, sauce, chicken, cheese, vegetables. The cheese is shredded using the thin, short cheese shred.

| **Southwest Chicken** | **Ounce** | **g** |
|---|---|---|
| Crust 11 1/4 inches square | 8.9-10.2 | 252-289 |
| Olive Oil | 0.35 | 10.0 |
| Chipotle Tom Sauce revised | 3.00 | 85.1 |
| Tyson® Smoked Chicken | 2.00 | 56.7 |
| Monterey Jack Shredded | 3.10 | 87.9 |
| SW Veggie Blend to include Roasted Pablano peppers, grilled julienne red and yellow peppers, grilled red onions and black beans | 2.00 | 56.7 |

### Example IIIc

### PEPPERONI

Order of Topping: Crust, olive oil, sauce, cheese, pepperoni, fontinella cheese sprinkle. Pepperoni will be 7.62cm (3 inches) in diameter and have 9 slices which will t hen be quartered making 36 quartered slices per pizza. Fontinella cheese is preshredded to sprinkle on top of pepperoni slices.

| **Pepperoni** | **Ounce** | **g** |
|---|---|---|
| Crust 11 1/4 inches square | 8.9-10.2 | 252-289 |
| Olive Oil | 0.35 | 10.0 |
| Margarita Sauce | 3.25 | 92.1 |
| Whole Milk Mozzarella Thick Shred | 4.00 | 113.4 |
| Pepperoni 3 inch - 9 slices quartered | 2.20 | 62.4 |
| Fontinella Preshredded | 0.05 | 14.2 |

### Example IIId

### THREE CHEESE BACON

Order of topping: Crust, olive oil, cream sauce, cheese and bacon. The cheeses are sliced rather than the traditional cheese shred.

| **Three Cheese Bacon** | **Ounce** | **g** |
|---|---|---|
| Crust 11 1/4 inches square | 8.9-10.2 | 252-289 |
| Olive Oil | 0.35 | 10.0 |
| Cream Gravy Sauce | 2.50 | 70.9 |
| Fontina Sliced | 0.95 | 26.9 |
| Whole Milk Mozzarella Sliced | 1.75 | 49.6 |
| Smoked Gouda Sliced | 0.80 | 22.7 |
| Bacon Pieces | 1.00 | 28.4 |

A cheese blade was designed to provide a 2.54 x 1.27 cm (1 inch by 1-2 inch) cheese slice.

The completed pizza products made according to the invention maintained the high quality crust of the untopped Examples I and II. The presence of the toppings including sauce, oils, meats, vegetables and other materials did not substantially affect the crust quality. The fully baked crusts obtained a characteristic toast mark appearance, a crispy exterior and the soft bready interior characteristic of hand made pizzeria produced pizza products. The use of the high quality rough cut or rough chopped products obtained a surface characteristic and appearance similar to the high quality pizza product of a restaurant or pizzeria. The taste panelists who were provided these products indicated that they were competitive with the pizzeria or restaurant products and were both visually appealing and satisfying as a food.

### Detailed Discussion of the Drawings

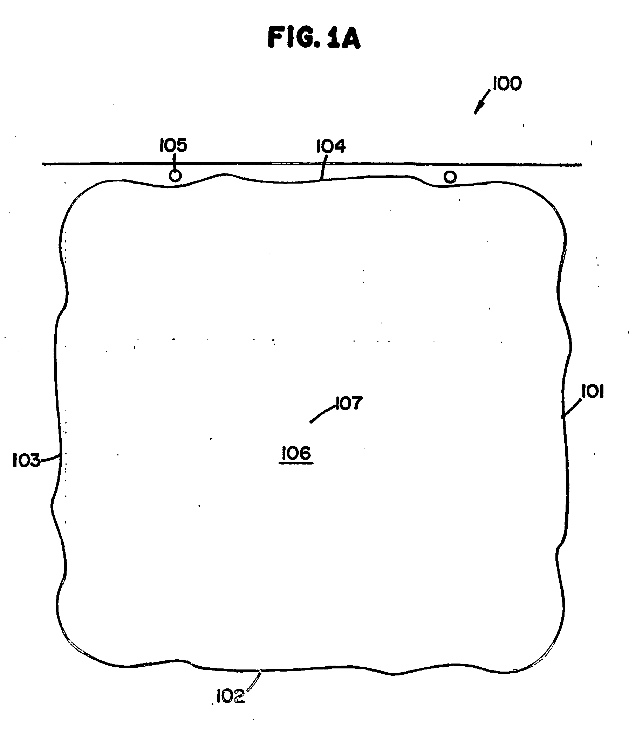

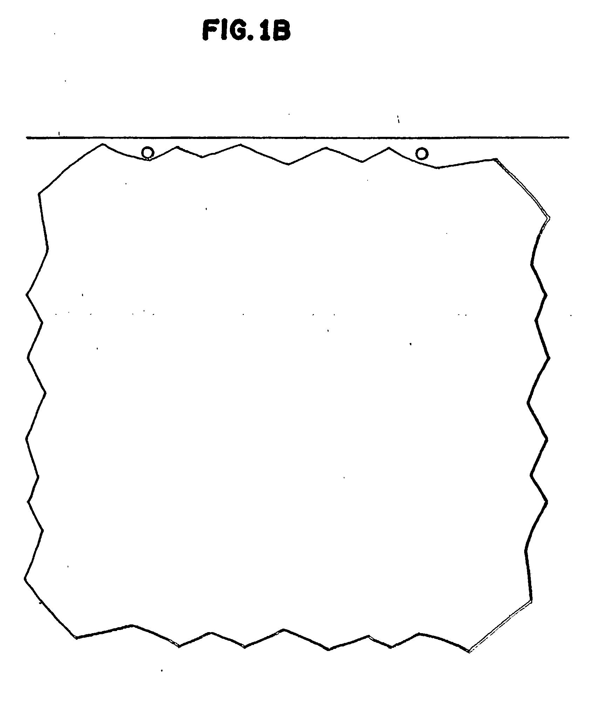

Figure 1 is a planar view of the top of an untopped pizza product of the invention. The figure shows the overall square aspect of the pizza with a top surface 106 and a central point 107. The pizza has four sides 101 through 104. Figure 1 shows one embodiment of a square pizza crust having an irregular edge. The irregular edges being repeatable in a four fold symmetry as the pizza crust is rotated around its central point 107. As the pizza crust is turned around the central point 107, the sides are indistinguishable and overlap in profile, Even though the sides are irregular and repeatable, the sides can be used to locate the pizza crust accurately for the precise application of toppings including sauce, cheese or other toppings. The generally irregular shape can have registration indicia formed in the irregular crust. These indicia can comprise a recessed portion of the periphery that can match registration means, in this figure pins 105, fixing the pizza crust in a precise location such that the cheese, sauce and toppings are accurately placed on the pizza crust and the toppings are uniform across the surface and reach as close to the edge as desired in this application commonly within 2 to 10 millimeters of the edge. The pizza crust 101 of the invention, in this embodiment, has no raised edge and comprises simply a raised cooked crust. Figure 1B shows a crust 110 similar to that shown in Figure 1A. The crust 110 in Figure 1B has a series of linear line segments 111 forming the perimeter of the crust. Similar to the crust in Figure 1A, the crust in Figure 1B has registration locations 112 that associate with registration pins 105 for the correct placement of the crust on a conveyor.

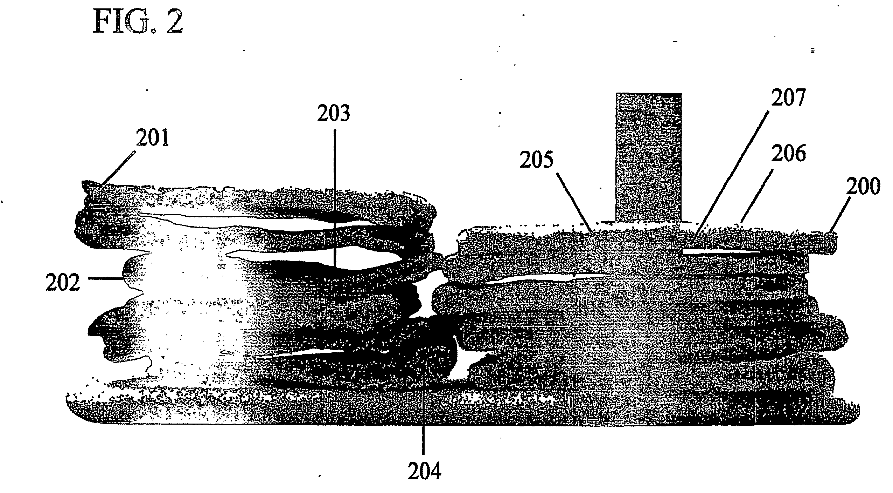

Figure 2 is an end view of a cross-section of both the par baked and final baked crust product. Figure 2 shows that the parbaked crust having a defined edge and thickness upon being fully cooked becomes thicker, obtains a more significant bread like aspect with open cell structure, and becomes more irregular, more like the nature of a hand made, oven baked, freshly made pizza crust. The parbaked crust 200 is shown having very regular top and bottom surfaces 206 and 207. The internal texture 205 appears to be very uniform while the overall aspect of the crust appears to be generally regular. The fully baked crust 201, however, has an expanded interior 202, a more irregular surface 203 and a very bready texture 204. The overall comparison of the parbaked crust 200 with the fully baked crust 201 shows that the product has expanded from about 15 to about 40% based on the initial parbaked product and departs from the flat aspect of the parbaked crust. The baked crust has at least 5% of it's surface that departs from the coplanar aspect of the parbaked crust.

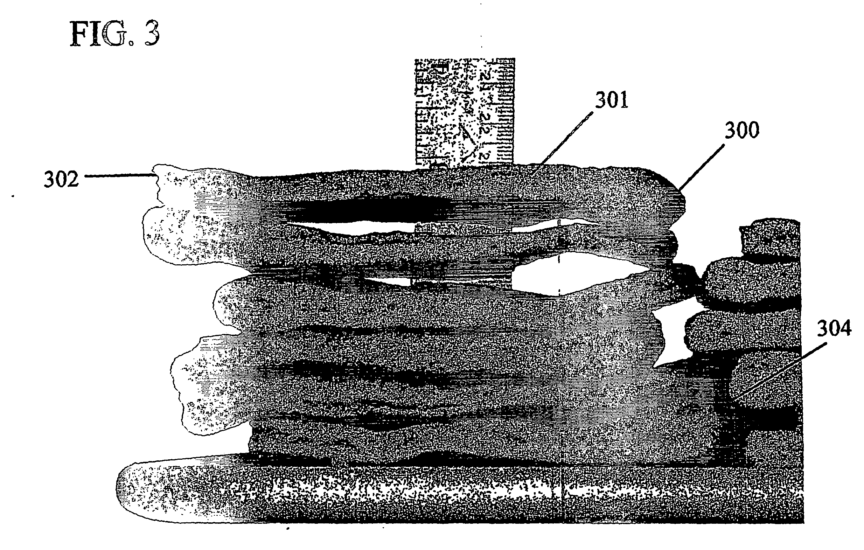

Figure 3 brings into clear focus the increased character of the fully baked crust of the invention that mimics a hand formed, oven baked, premium crust. Overall, crust 300 is shown with six separate examples in the Figure. Each crust is unique in cross-section 301 and edge formation 302. While the width of the cross-section of 300 is substantially identical to the cross-section of other crusts in Figure 3, the interior texture 304 of each crust appears to be expanded, bready and unique from crust to crust. Similarly, the edge formation 302 of the crust appears to be unique from crust to crust in the comparison materials. Most importantly, the interior 301 of the crust shows that the crust has expanded or raised during baking increasing the bready soft character of the interior of the crust compared to a more dense character in the parbaked predecessor material.

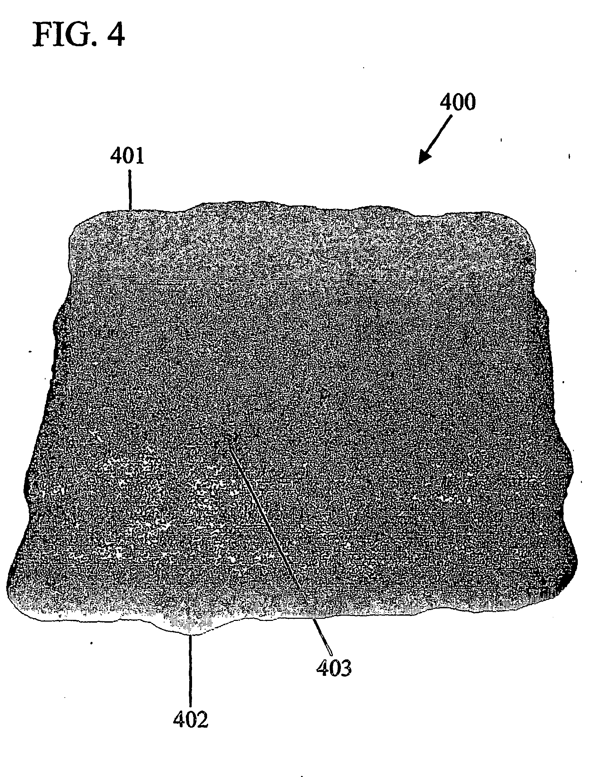

Figure 4 is a top view of a fully baked pizza crust of the invention without toppings. The crust 400 is a fully baked crust. The crust 400 has a curved linear edge 401 characteristic of hand formed crusts. The crust 400 shows an edge 401 having attractive toast coloration 402 characteristic of premium baking processes. Similarly, the crust 400 has a top surface 403 that additionally shows that attractive toasted colors characteristic of premium oven baking.

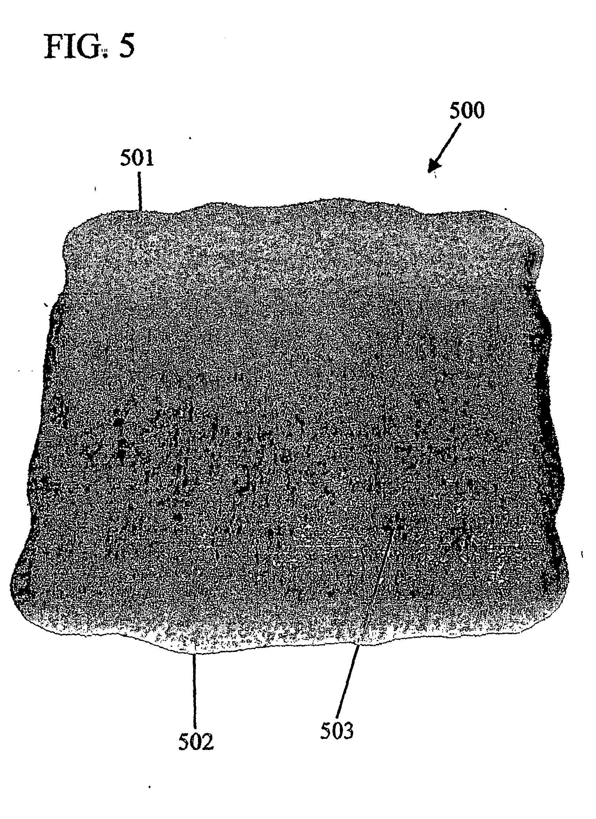

Figure 5 is a bottom view of a fully baked crust 500 of the invention. Similarly, the bottom crust 500 has an edge 501 that conforms to the edge of the top view in Figure 4. The crust 500 has an edge with toasted colors 502 characteristic of premium baking. Similarly, the bottom surface 503 has a random distribution of attractive toasted color similar to that of premium baked hand formed crusts.

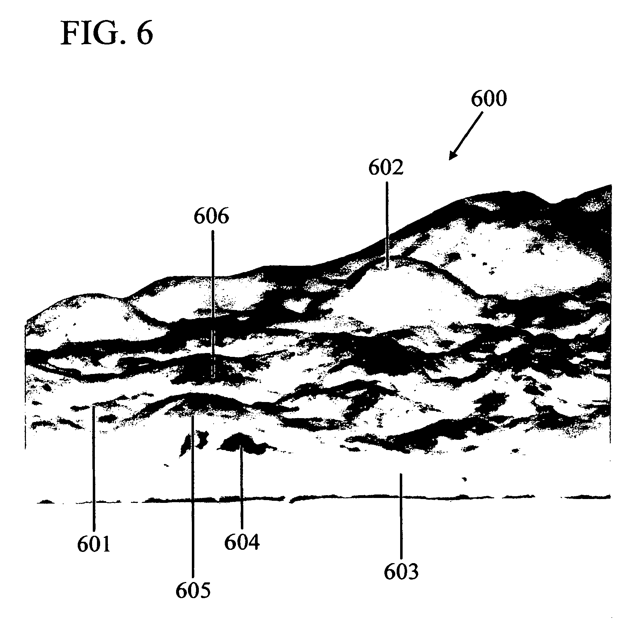

Figure 6 is a cross-sectional view showing somewhat the bubbled top surface of the premium crust of the invention. The crust 600 includes a crust bubble formation 604 and a surface bubble formation 605. The crust bubble formation 604 and the surface bubble formation 605 are characteristic of the crust of the invention that expands upon final baking after parbaking and freezing. The unique characteristics of these pizzas can be easily ascertained by comparing the parbaked pizza of Figure 2 to the fully baked pizza crusts of Figure 2 and the fully baked pizza crusts of Figure 6. The surface of the crust 600 shows a variety of bubble formations ranging from moderately sized bubbles 605 and 606 to large bubbles 602. The cross-section 601 clearly shows a bready interior 603 and bubble formation 604 in the cross-section.

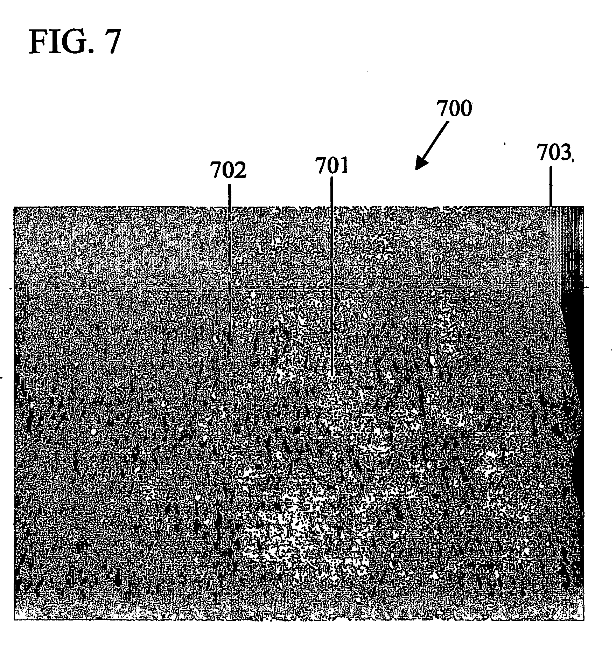

Figure 7 shows a close up bottom view of a pizza crust 701 of the invention. This view illustrates the use of bread crumbs 701 embedded into the crust bottom 700. The bread crumbs 701 provide flavor and texture to the crispy exterior of the pizza crusts 700. The pizza crust 7600 of Figure 7 has an irregular edge 703 characteristic of hand thrown pizzas and attractive toasted colors 702 in the bottom surface of the pizza crust 700.

## Claims

1. A parbaked crust (100; 200; 300; 400; 500; 600; 700) for a premium pizza, the crust (100; 200; 300; 400; 500; 600; 700) comprising a flour based dough formula comprising 65 to 75% wt moisture, 0.5 to 2wt% sugar sweetener, and less than 2% oil, the parbaked crust (100; 200; 300; 400; 500; 600; 700) capable of expansion upon baking at 176.6°C to 232.2°C; the crust (100; 200; 300; 400; 500; 600; 700) further comprising a planar crust (106; 206) in a square aspect and having a crust edge (101, 102, 103, 104), the crust having a fourfold symmetry when rotated in the plane of the planar crust, the crust edge (101, 102, 103, 104) having an irregular profile, wherein the irregular profile provides registration indicia.

2. A crust (100; 200; 300; 400; 500; 600; 700) according to claim 1, wherein, the crust edge (101, 102, 103, 104) has an irregular repeatable profile.

3. A crust (100; 200; 300; 400; 500; 600; 700) according to claim 1 or claim 2, wherein, the registration indicia are an indentation in the irregular profile of the crust.

4. A crust (100; 200; 300; 400; 500; 600; 700) according to any one of the preceding claims wherein the crust edge (101, 102, 103, 104) includes one of a sinusoidal profile and a series of connected line segments.

5. A crust (100; 200; 300; 400; 500; 600; 700) according to any one of the preceding claims, wherein the crust has a thickness of 0.2 to 2cm and comprises 1.3 to 1.9% wt% oil.

6. A crust (100; 200; 300; 400; 500; 600; 700) according to any one of the preceding claims, wherein the crust further includes a surface application of bread crumbs in an amount of 2 to 40 grams of bread crumbs per each 0.45kg of crust.

7. A crust (100; 200; 300; 400; 500; 600; 700) according to any one of the preceding claims, wherein the crust ranges from 28.58 to 31.75cm on a side.

8. A crust (100; 200; 300; 400; 500; 600; 700) according to any one of the preceding claim, wherein the crust has a surface area of 709.68 to 967.74cm².

9. A crust (100; 200; 300; 400; 500; 600; 700) according to any one of the preceding claims, wherein the crust has a weight of 255 to 340 grams.

10. A method of making a parbaked crust for a premium pizza, the method comprising:
(a) preparing a crust (100; 200; 300; 400; 500; 600; 700) comprising a flour based dough formula comprising 65 to 75% wt moisture, 0.5 to 2wt% sugar sweetener, and less than 2% oil;
(b) forming the dough into a crust (100; 200; 300; 400; 500; 600; 700) further comprising a planar crust in a square aspect and having a crust edge (101, 102, 103, 104), the crust having a fourfold symmetry when rotated in the plane of the planar crust, the crust edge (101, 102, 103, 104), having an irregular profile, wherein the irregular profile provides registration indicia;
(c) parbaking the crust (100; 200; 300; 400; 500; 600; 700) at a temperature of at least 426.7°C for a period of less than 120 seconds to form a parbaked crust; the parbaked crust capable of expansion upon baking at 176.6°C to 232.2°C.

11. A method according to claim 10, further comprising forming the dough into a sheet having a thickness of 0.2 to 0.4cm and comprising 1.3 to 1.9 wt% oil.

## Patentansprüche

1. Ein vorgebackener Boden (100; 200; 300; 400; 500; 600; 700) für eine hochwertige Pizza, wobei der Boden (100; 200; 300; 400; 500; 600; 700) ein auf Mehl basiertes Teigrezept umfasst, das 65 bis 75 Gew.-% Feuchtigkeit, 0,5 bis 2 Gew.-% Zuckersüßstoff und weniger als 2% Öl umfasst, wobei der vorgebackene Boden (100; 200; 300; 400; 500; 600; 700) zur Ausdehnung beim Backen bei 176,6 °C bis 232,2 °C fähig ist; wobei der Boden (100; 200; 300; 400; 500; 600; 700) weiterhin einen ebenen Boden (106; 206) mit rechteckiger Erscheinung umfasst und eine Bodenkante (101,102, 103,104) hat, wobei der Boden eine 4-fache Symmetrie aufweist, wenn er in der Ebene des ebenen Bodens rotiert wird, und die Bodenkante (101; 102; 103; 104) ein unregelmäßiges Profil hat, wobei das unregelmäßige Profil Ausrichtungsanzeichen aufweist.

2. Ein Boden (100; 200; 300; 400; 500; 600; 700) gemäß Anspruch 1, wobei die Bodenkante (101; 102; 103; 104) ein unregelmäßiges, reproduzierbares Profil hat.

3. Ein Boden (100; 200; 300; 400; 500; 600; 700) gemäß Anspruch 1 oder Anspruch 2, wobei die Ausrichtungsanzeichen eine Eindrückung im unregelmäßige Profil des Bodens sind.

4. Ein Boden (100; 200; 300; 400; 500; 600; 700) gemäß einem der voranstehenden Ansprüche, bei dem die Bodenkante (101; 102; 103; 104) eines von einem sinusförmigen Profil und einer Reihe verbundener Linienabschnitte enthält.

5. Ein Boden (100; 200; 300; 400; 500; 600; 700) gemäß einem der voranstehenden Ansprüche, wobei der Boden eine Dicke von 0,2 bis 2 cm aufweist und 1,3 bis 1,9 Gew.-% Öl umfasst.

6. Ein Boden (100; 200; 300; 400; 500; 600; 700) gemäß einem der voranstehenden Ansprüche, wobei der Boden weiterhin eine Oberflächenanwendung von Brotkrümeln in einer Menge von 2 bis 40 g Brotkrümel pro je 0,45 kg Boden enthält.

7. Ein Boden (100; 200; 300; 400; 500; 600; 700) gemäß einem der voranstehenden Ansprüche, wobei der Boden im Bereich von 28,58 bis 31,75 cm einer Seite ist.

8. Ein Boden (100; 200; 300; 400; 500; 600; 700) gemäß einem der voranstehenden Ansprüche, wobei der Boden ein Oberflächengebiet von 709,68 bis 967,74 cm² hat.

9. Ein Boden (100; 200; 300; 400; 500; 600; 700) gemäß einem der voranstehenden Ansprüche, wobei der Boden ein Gewicht von 255 bis 340 g hat.

10. Verfahren zur Herstellung eines vorgebackenen Bodens für eine hochwertige Pizza, wobei das Verfahren umfasst:
(a) Herstellen eines Bodens (100; 200; 300; 400; 500; 600; 700), der ein auf Mehl basiertes Teigrezept umfasst, das 65 bis 75 Gew.-% Feuchtigkeit, 0,5 bis 2 Gew.-% Zuckersüßstoff und weniger als 2% Öl umfasst;
(b) Formen des Teigs zu einem Boden (100; 200; 300; 400; 500; 600; 700), der weiterhin einen ebenen Boden mit rechteckiger Erscheinung umfasst und eine Bodenkante (101,102, 103, 104) hat, wobei der Boden eine 4-fache Symmetrie hat, wenn er in der Ebene des ebenen Bodens rotiert wird, wobei die Bodenkante (101; 102; 103; 104) ein unregelmäßiges Profil aufweist, wobei das unregelmäßige Profil Ausrichtungsanzeichen aufweist;
(c) Vorbacken des Bodens (100; 200; 300; 400; 500; 600; 700) bei einer Temperatur von wenigstens 426,7 °C für eine Zeitdauer von weniger als 120 s, um einen vorgebackenen Boden zu bilden; wobei der vorgebackene Boden beim Backen bei 176,6 °C bis 232,2 °C zur Ausdehnung fähig ist.

11. Verfahren nach Anspruch 10, das weiterhin das Formen des Teigs in eine Schicht mit einer Dicke von 0,2 bis 0,4 cm und umfassend 1,3 bis 1,9 Gew.-% Öl umfasst.

## Revendications

1. Croûte précuite (100 ; 200 ; 300 ; 400 ; 500 ; 600 ; 700) pour une pizza de qualité supérieure, la croûte (100 ; 200 ; 300 ; 400 ; 500 ; 600 ; 700) étant formée à partir d'une composition de pâte à base de farine comprenant 65 à 75 % en poids d'humidité, 0,5 à 2 % en poids d'édulcorant et moins de 2 % d'huile, la croûte précuite (100 ; 200 ; 300 ; 400 ; 500 ; 600 ; 700) pouvant gonfler lorsqu'elle est cuite entre 176,6°C et 232,2°C ; et la croûte (100 ; 200 ; 300 ; 400 ; 500 ; 600 ; 700) comportant une partie de croûte plane (106 ; 206) d'aspect carré et pourvue d'un bord de coûte (101, 102, 103, 104), la croûte présentant une quadruple symétrie lorsqu'elle est tournée dans le plan de la partie de croûte plane, et le bord de coûte (101, 102, 103, 104) ayant un profil irrégulier, **caractérisée en ce que** le profil irrégulier fournit des marques de repérage.

2. Croûte (100 ; 200 ; 300 ; 400 ; 500 ; 600 ; 700) selon la revendication 1, **caractérisée en ce que** le bord de coûte (101, 102, 103, 104) possède un profil irrégulier reproductible.

3. Croûte (100 ; 200 ; 300 ; 400 ; 500 ; 600 ; 700) selon la revendication 1 ou 2, **caractérisée en ce que** les marques de repérage consistent en un entaillage dans le profil irrégulier de la croûte.

4. Croûte (100 ; 200 ; 300 ; 400 ; 500 ; 600 ; 700) selon l'une quelconque des revendications précédentes, **caractérisée en ce que** le bord de coûte (101, 102, 103, 104) présente soit un profil sinusoïdal, soit une série de segments de droite reliés.

5. Croûte (100 ; 200 ; 300 ; 400 ; 500 ; 600 ; 700) selon l'une quelconque des revendications précédentes, **caractérisée en ce que** la croûte possède une épaisseur de 0,2 à 2 cm et comprend 1,3 à 1,9 % en poids d'huile.

6. Croûte (100 ; 200 ; 300 ; 400 ; 500 ; 600 ; 700) selon l'une quelconque des revendications précédentes, **caractérisée en ce que** la croûte comprend en outre une application en surface de chapelure dans une quantité de 2 à 40 grammes de chapelure pour 0,45 kg de croûte.

7. Croûte (100 ; 200 ; 300 ; 400 ; 500 ; 600 ; 700) selon l'une quelconque des revendications précédentes, **caractérisée en ce que** la croûte présente une longueur de côté de 28,58 à 31,75 cm.

8. Croûte (100 ; 200 ; 300 ; 400 ; 500 ; 600 ; 700) selon l'une quelconque des revendications précédentes, **caractérisée en ce que** la croûte présente une superficie de 709,68 à 967,74 cm².

9. Croûte (100 ; 200 ; 300 ; 400 ; 500 ; 600 ; 700) selon l'une quelconque des revendications précédentes, **caractérisée en ce que** la croûte possède un poids de 225 à 340 grammes.

10. Procédé de fabrication d'un croûte précuite pour une pizza de qualité supérieure, le procédé comprenant les étapes consistant à :
(a) préparer une croûte (100 ; 200 ; 300 ; 400 ; 500 ; 600 ; 700) formée à partir d'une composition de pâte à base de farine comprenant 65 à 75 % en poids d'humidité, 0,5 à 2 % en poids d'édulcorant et moins de 2 % d'huile ;
(b) mettre en forme la pâte pour former une croûte (100 ; 200 ; 300 ; 400 ; 500 ; 600 ; 700) comportant une partie de croûte plane d'aspect carré et pourvue d'un bord de coûte (101, 102, 103, 104), la croûte présentant une quadruple symétrie lorsqu'elle est tournée dans le plan de la partie de croûte plane, et le bord de coûte (101, 102, 103, 104) ayant un profil irrégulier, sachant que le profil irrégulier fournit des marques de repérage ;
(c) précuire la croûte (100 ; 200 ; 300 ; 400 ; 500 ; 600 ; 700) à une température d'au moins 426,7°C pendant moins de 120 secondes, afin de former une croûte précuite ; la croute précuite pouvant gonfler lorsqu'elle est cuite entre 176,6°C et 232,2°C.

11. Procédé selon la revendication 10, comprenant en outre la mise en forme de la pâte en une feuille ayant une épaisseur de 0,2 à 0,4 cm et comprenant 1,3 à 1,9 % en poids d'huile.
